# EUROPEAN PATENT SPECIFICATION

(11) **EP 3 403 802 B1**
(45) Date of publication and mention of the grant of the patent: **08.04.2020**
(21) Application number: 16885075.8
(22) Date of filing: 08.12.2016
(51) Int. Cl.: B29C 33/38, B29C 33/02, B29C 33/10, B29K 21/00, B29D 30/06

(54) **METHOD FOR PRODUCING MOLD FOR RUBBER ARTICLES**
VERFAHREN ZUR HERSTELLUNG EINER GUSSFORM FÜR KAUTSCHUKARTIKEL
PROCÉDÉ DE PRODUCTION D'UN MOULE POUR ARTICLES EN CAOUTCHOUC

(30) Priority: 15.01.2016 JP 2016006346
(43) Date of publication of application: 21.11.2018
(73) Proprietor: Bridgestone Corporation, Tokyo 104-8340 (JP)
(72) Inventor: ISHIHARA, Yasuyuki, Tokyo 104-8340 (JP)
(74) Representative: Oxley, Robin John George
(86) International application number: PCT/JP2016/086629
(87) International publication number: WO 2017/122472

(56) References cited:
- EP-A1- 1 588 820
- EP-A1- 2 113 357
- WO-A1-03/099535
- WO-A1-2006/129642
- WO-A1-2015/156413
- JP-A- H11 300 746
- JP-A- 2002 301 907
- JP-A- 2005 305 921
- JP-A- 2015 202 579

## Description

### BACKGROUND OF THE INVENTION

### Field of the Invention

The present invention relates to a method for manufacturing a mold for rubber article comprising a molding member for molding a rubber article.

### Related Background of the Invention

In the mold for rubber article, a rubber article is molded by a molding member with a molding surface of the molding member being brought into contact with the rubber article. In addition, the rubber article is hardened by heating while being pushed against the molding member. At that time, air is shut in between the rubber article and the molding member, and an insufficient filling of rubber (bareness, air bubbles, etc.) may be caused in the rubber article. In particular, a tire which is the rubber article has complicated grooves in its tread part, and the molding member for tire has complicated projections corresponding to grooves of the tire. Therefore, a closed space between the molding member and the tire is formed by the projections, and the insufficient filling of rubber is apt to be caused.

To prevent the insufficient filling of rubber, the mold for rubber article usually has a ventilation mechanism (vent part) in the molding member, and air is exhausted by the ventilation mechanism. The ventilation mechanism is, for example, through-holes (vent holes) or slits (slit vents) formed in the molding member. The vent hall can easily formed in the molding member in compared with the slit vent. However, beard-like rubber (spew) would be formed in the rubber article as the rubber enters into the vent hole, and there is a risk that an appearance or an initial performance of the rubber article would be affected.

In the slit vent, by regulating the width and the shape thereof, the rubber can be restrained from protruding into the slit vent and thus burrs of the rubber can be restrained from being produced in the rubber article. However, it is difficult to precisely form such slit vent in the molding member of the mold for rubber article, and high technology is needed to form the slit vent. Therefore, man-hour of production and cost of the mold for rubber article can be increased.

In concerned with this, a metallic mold for tire molding has been known, in which piece metallic molds (molding members) are manufactured by casting such that a gap (slit vent) is formed between the piece metallic molds cf. JP 2007-015152). However, in the conventional metallic mold described in JP 2007-015152, the slit vent can be formed only in a part between the peace metallic molds and it is difficult to form the slit vent in the peace metallic mold itself.

EP 1 588 820 A1 describes a method for manufacturing a mold for rubber article comprising a molding member with a molding surface for being brought into contact with a rubber article to mold the rubber article and a back surface opposite to the molding surface, comprising steps of forming the molding member having a thin-walled part by making a part in which a slit vent of the molding member is to be formed, thinner than a thick walled part of the molding member, and forming, in the thin-walled part of the molding member, the slit vent penetrating the thin-walled part and opening to the molding surface. Reference is also made to WO 2015/156413 A1, JP 2015 202579 A, and WO 2006/129642 A1.

### SUMMARY OF THE INVENTION

### Problems to be Solved by Invention

The present invention was made in view of the above-described conventional problems and an object thereof is, in a molding member of a mold for rubber article, to form a slit vent with ease.

### Means for solving Problems

The present invention is a method for manufacturing a mold for rubber article in accordance with claim 1. The method for manufacturing mold for rubber article comprises the steps of forming the molding member having a thin-walled part by making a part in which a slit vent of the molding member is to be formed, thinner than a thick walled part of the molding member, and forming, in the thin-walled part of the molding member, the slit vent penetrating the thin-walled part and opening to the molding surface. Also disclosed is a mold for rubber article comprising a molding member with a molding surface being brought into contact with a rubber article to mold the rubber article. The molding member has a thin-walled part thinner than other part and a slit vent penetrating the thin-walled part and opening to the molding surface.

### EFFECTS OF THE INVENTION

According to the present invention, the slit vent can be formed in the molding member of the mold for rubber article with ease.

### BRIEF DESCRIPTION OF THE DRAWINGS

Fig. 1 is a sectional view illustrating a molding device for rubber article of a first embodiment;
Fig. 2 is a sectional view illustrating the molding device for rubber article of the first embodiment;
Fig. 3 is a sectional view illustrating a plurality of split molds and movable members cut along X-X line in Fig. 1;
Figs. 4A to 4C are views illustrating a molding member of a mold for rubber article of the first embodiment;
Fig. 5 is a schematic view showing a slit processing of a slit vent in the first embodiment, which is not in accordance with the invention;
Figs. 6A to 6C are views illustrating a molding member of a mold for rubber article of a second embodiment;
Figs. 7A to 7C are views illustrating a molding member of a mold for rubber article of a third embodiment;
Fig. 8 is a schematic view showing a slit processing of a slit vent in the third embodiment, which is in accordance with the invention;
Figs. 9A to 9C are views illustrating a molding member of a mold for rubber article of a fourth embodiment; and
Figs. 10A to 10C are views illustrating a molding member of a mold for rubber article of a fifth embodiment.

### DESCRIPTION OF THE PREFERRED EMBODIMENTS

For illustrating the invention, which is defined by claim 1, embodiments of a method for manufacturing mold for rubber article and a mold for rubber article will be described with reference to the drawings.

The mold for rubber article is a mold for rubber molding to mold a rubber article and is manufactured by the method for manufacturing mold for rubber article. The mold for rubber article is provided in a molding device for rubber article and molds the rubber article (a product made of rubber).

In the following, taking the case that a mold for rubber article is a mold for tire (mold for tire molding) for an example, a plurality of embodiments of the method for manufacturing the mold for rubber article (merely called as the mold in the following) and the mold will be described. Therefore, the rubber article is a tire and the molding device for rubber article is a tire molding device. The mold is used as a mold for tire at the time of molding (at the time of vulcanization) of the tire and molds the tire.

### (First embodiment)

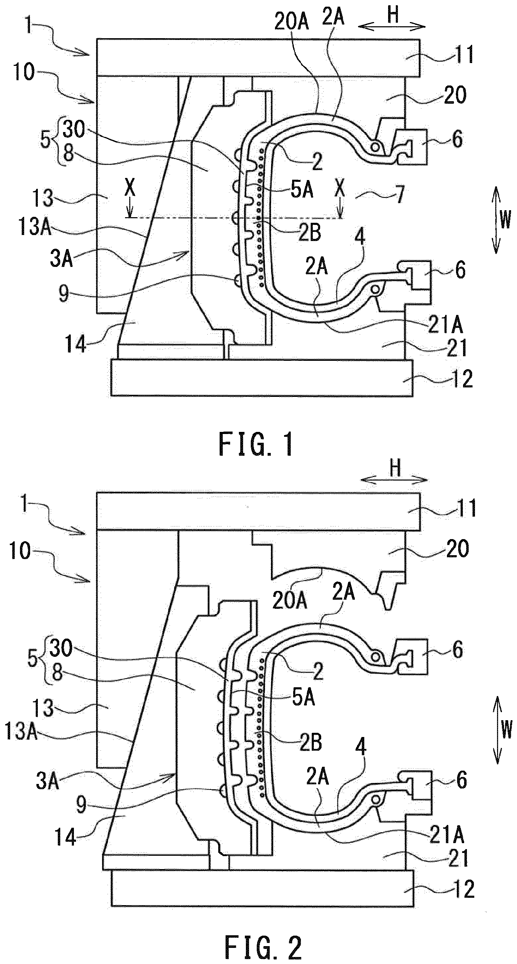

Figs. 1 and 2 are sectional views illustrating a molding device for rubber article (tire molding device 1) of a first embodiment, and illustrate the tire molding device 1 and a tire 2 cut in the width direction of the tire 2 (tire width direction W). Moreover, Fig. 1 illustrates a part of the tire molding device 1 in a closed state, and Fig. 2 illustrates a part of the tire molding device 1 in an opened state.

As illustrated, the tire molding device 1 comprises a ring-shaped mold 3A for housing the tire 2, an expandable bladder 4 and an opening/closing mechanism 10 to open and close the mold 3A. The tire molding device 1 heats to vulcanize the tire 2 in the mold 3A and molds the tire 2 by the mold 3A.

The mold 3A is an outer mold for molding an outer surface of the tire 2, and has a pair of ring-shaped side molds 20, 21 (upper side mold 20 and lower side mold 21) and a plurality of split molds 5. The upper side mold 20 and the lower side mold 21 have each of molding surfaces (side molding surfaces) 20A, 21A to be in contact with side parts 2A of the tire 2 and thus mold the side parts 2A by the molding surfaces 20A, 21A.

The plurality of split molds 5 are segments divided in a circumferential direction (mold circumferential direction) of the mold 3A, and are tread molds each to mold a tread part 2B of the tire 2. The circumferential direction of the mold is agreed with a circumferential direction (tire circumferential direction) of the tire 2. The plurality of split molds 5 have each of molding surfaces (tread molding surfaces) 5A to be in contact with the tread part 2B of the tire 2 and mold the tread part 2B by the molding surfaces 5A while they are put together into a ring shape.

Tire molding device 1 comprises a holding ring 6 to hold an end of the bladder 4 and a supply device (not illustrated) to supply gas into the bladder 4 and expands the bladder 4 by gas. The bladder 4 is arranged in the tire 2 and is expanded by gas so that it is in contact with an inner surface of the tire 2. At the time of molding of the tire 2, the tire molding device 1 pressurizes the tire 2 by the expanded bladder 4 and pushes the tire 2 against the molding surfaces 5A, 20A, 21A of the mold 3A. In addition, after molding of the tire 2, gas is exhausted from the bladder 4, so that the bladder 4 is contracted.

The opening/closing mechanism 10 has an upper plate 11, a lower plate 12, a cylindrical outer ring 13 fixed to the upper plate 11 and a plurality of movable members 14. By a moving device (not illustrated), the upper plate 11 is moved in a vertical direction (tire width direction W) above the lower plate 12 so that the upper plate 11 and the lower plate 12 are moved toward or away from each other. The mold 3A is arranged between the upper plate 11 and the lower plate 12 and is connected to the upper plate 11 and the lower plate 12. Specifically, the upper side mold 20 is attached to the upper plate 11 and is integrally moved together with the upper plate 11. In addition, the lower side mold 21 is attached to the lower plate 12.

The outer ring 13 surrounds the mold 3A and the plurality of movable members 14 and is moved integrally with the upper plate 11. Each of the plurality of movable members 14 is movably connected to an inner periphery part (guide part 13A) of the outer ring 13, and is guided, in accordance with movement of the outer ring 13, by the guide part 13A of the outer ring 13 and is moved in a radial direction of the mold 3A (radial direction H of mold). The radial direction H of the mold agrees with a radial direction of tire 2 (tire radial direction) . Each of the plurality of split molds 5 is attached to the movable member 14 and is moved integrally with the movable member 14 in the radial direction H of the mold.
In moving, the plurality of movable members 14 slide on a top surface of the lower plate 12 so that the plurality of movable members 14 and the split molds 5 are moved radially. In this way, the plurality of movable members 14 and the split molds 5 are moved toward or away from each other in the mold circumferential direction.

The opening/closing mechanism 10 moves the upper side mold 20 and the lower side mold 21 toward or away from each other and moves the plurality of split molds 5 toward or away from each other, by moving the upper plate 11 and the outer ring 13. In this way, the opening/closing mechanism 10 opens or closes the mold 3A. When the mold 3A is opened, the upper side mold 20 and the lower side mold 21 are moved away from each other, and the plurality of split molds 5 are moved away from each other at a dividing position of the split molds 5. When the mold 3A is closed, the upper side mold 20 and the lower side mold 21 are moved toward each other, and the plurality of split molds 5 are moved to be in contact with each other at the dividing position of the split molds 5. In this state, the plurality of split molds 5 are put together into a ring shape, and are also combined with the upper side mold 20 and the lower side mold 21.

The upper plate 11, the lower plate 12 and the outer ring 13 are also heating members (upper heating member, lower heating member, outer periphery heating member) to heat the mold 3A. The tire molding device 1 heats the upper plate 11, the lower plate 12 and the outer ring 13 by heating means (not illustrated) and heats the mold 3A through the upper plate 11, the lower plate 12 and the outer ring 13. In this way, the mold 3A is heated to molding temperature (vulcanization temperature) of the tire 2, and thus the tire 2 is heated to the molding temperature through the mold 3A.

At the time of molding of the tire 2, first of all, the mold 3A is opened (cf. Fig. 2) and an un-vulcanized tire 2 is arranged on the molding surface 21A of the lower side mold 21. Successively, the mold 3A is closed (cf. Fig. 1) so as to house the tire 2 in an internal space 7 of the mold 3A. In addition, the bladder 4 is arranged in the tire 2 and then the tire 2 is pressurized by the expanded bladder 4. In this state, the tire 2 is heated so as to be vulcanized and molded. The upper side mold 20 and the lower side mold 21 are brought into contact with the side parts 2A of the tire 2, so that the side parts 2A of the tire 2 are molded by the molding surfaces 20A, 21A, respectively. The plurality of split molds 5 are brought into contact with the tread part 2B of the tire 2, so that the tread part 2B of the tire 2 is molded by the molding surface 5A. After the molding of the tire 2, the mold 3A is opened and then the tire 2 after molding (after vulcanization) is taken out of the mold 3A.

Each of the plurality of split molds 5 has a molding member 30 to mold the tire 2 and a support member 8 to support the molding member 30. The molding member 30 is a design surface member having the molding surface 5A (tire molding surface), and the support member 8 is an outer periphery member covering an outer periphery part of the molding member 30. The molding member 30 is attached to the support member 8, and the support member 8 is attached to the movable member 14. The support member 8 is attached to a back surface of the molding member 30 (surface opposite to the tire 2) and supports the molding member 30.

The molding surface 5A is a molding part (contacting part) of the molding member 30. The molding member 30 contacts with the tire 2 through the molding surface 5A so as to mold the tire 2. Exhaust passages 9 are formed between the molding member 30 and the support member 8. At the time of molding of the tire, air is exhausted through the slit vents of the molding member 30 into the exhaust passages 9 of the split mold 5 without being shut in between the tire 2 and the molding member 30. In addition, air is exhausted outside the mold 3A through the exhaust passages 9.

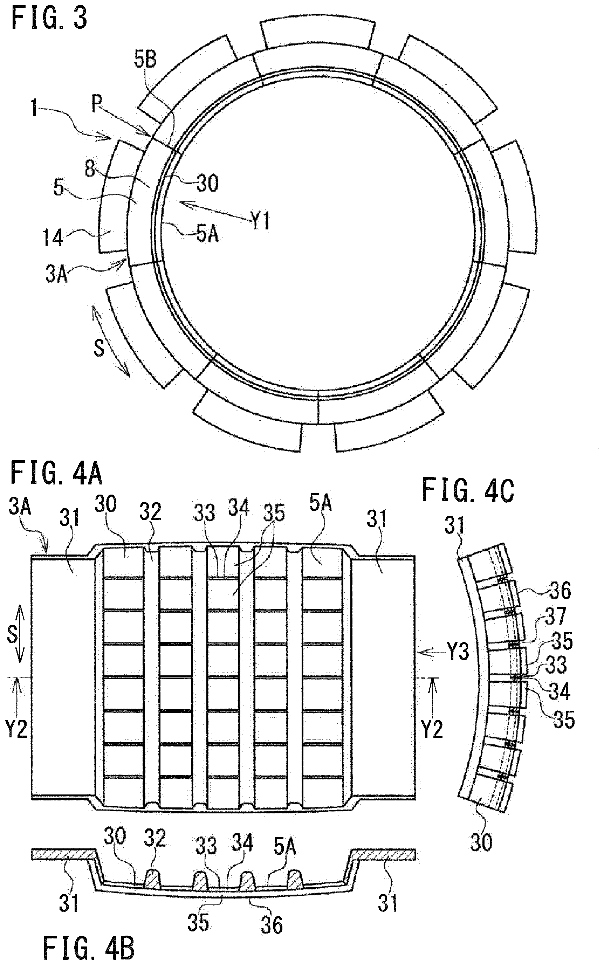

Fig. 3 is a sectional view illustrating a plurality of split molds 5 and the movable members 14 cut along X-X line in Fig. 1.

As illustrated, the plurality of spit molds 5 are divided at each of a plurality of dividing positions P, and split surfaces 5B of the split molds 5 are opposed to each other. The split surface 5B is an end surface located at the ends in a mold circumferential direction S of the molding member 30 and the support member 8, and is formed into a smooth plane surface. The plurality of split molds 5 in a divided state are put together into a ring shape, so that the split surfaces 5B are closely contacted with each other and are clamped by the predetermined mold clamping force. The mold 3A heats and molds the tire 2 by the plurality of clamped split molds 5.

Figs. 4A to 4C are views illustrating the molding member 30 of a mold 3A of the first embodiment, and Fig. 4A is a front view of the molding member 30 viewed from a direction shown by an arrow Y1 in Fig. 3. Fig. 4B is a sectional view of the molding member 30 cut along Y2-Y2 line in Fig. 4A, and Fig. 4C is a bottom view of the molding member 30 viewed from a direction shown by an arrow Y3 in Fig. 4A.

As illustrated, the molding material 30 has a pair of fixed parts 31 to be fixed to the support member 8, a plurality of projections 32 formed on the molding surface 5A, a thin-walled part 33 which is a thin part relatively in the molding material 30 and a plurality of slit vents 34. The projections 32 are groove molding parts to mold grooves on the tire 2, and each of the projections 32 is formed into the shape corresponding to the groove of the tire 2 on the molding surface 5A.

The thin-walled part 33 of the molding member 30 is thinner than other part (thick-walled part 35) of the molding member 30, and the thickness of the thin-walled part 33 is thinner than that of the thick-walled part 35. In addition, the thin-walled part 33 is provided in all over the part in which the slit vent 34 of the molding member 30 is to be formed. Width of the thin-walled part 33 is wider than that of the slit vent 34, and the slit vent 34 is located in the thin-walled part 33. The thick-walled part 35 is a part not including the thin-walled part 33 of the molding member 30 and is thicker than the thin-walled part 33, and the thick-walled part 35 includes a part of the projections 32 of the molding member 30. The thin-walled part 33 and the thick-walled part 35 are provided on a part of the molding member 30 for contacting with the tire 2 (the part that the molding surface 5A of the molding member 30 is provided) . By virtue of the molding surface 5A on the thin-walled part 33 and the thick-walled part 35, the tire 2 is molded.

On the molding surface 5A of the molding member 30, the thin-walled part 33 and the thick-walled part 35 are formed smoothly as a continuous plain surface except the projections 32. In contrast, on a surface opposite to the molding surface 5A of the molding member 30 (back surface 36 of the molding member 30), the thin-walledpart 33 is a recess part recessed with respect to the thick-walled part 35, and a step 37 is formed between the thin-walled part 33 and the thick-walled part 35.

Here, the projection 32 of the molding member 30 extends along the mold circumferential direction S. The thin-walled part 33 and the slit vent 34 extend in a direction intersecting with the mold circumferential direction S and intersect with the projection 32. The thin-walled part 33 is located between two thick-walled parts 35, and defines a groove part between the two thick-walled parts 35 on the back surface 36 of the molding member 30.
Between the projections 32, a plurality of thin-walled parts 33 (slit vents 34) are arranged at intervals so as to be parallel to the molding member 30.

The slit vent 34 is a slit-shaped vent part to exhaust air between the tire 2 and the molding member 30 and is formed in the thin-walled part 33 of the molding member 30. The slit vent 34 penetrates the thin-walled part 33 and opens to the molding surface 5A of the molding member 30. In addition, the slit vent 34 opens to the back surface 36 of the molding member 30, and air is exhausted from the molding surface 5A side to the back surface 36 side through the slit vent 34. In each of the plurality of thin-walled parts 33, the slit vent 34 is formed in a direction of thickness of the thin-walled part 33, and the depth of the slit vent 34 is the same depth as the thickness of the thin-walled part 33.

The mold 3A comprises a plurality of molding members 30 (cf. Fig. 3) and a plurality of slit vents 34. At the time of molding of the tire 2, the plurality of molding members 30 are put together into a ring shape while each of them is supported by the support member 8. The mold 3A molds the tire 2 by the plurality of molding members 30 while exhausting air through the slit vents 34. In this way, an insufficient filling of rubber caused in a tire is suppressed.

The molding member 30 (cf. Figs. 4) is formed by, for example, lamination molding (powder lamination molding etc.), electroforming or plating molding. In the powder lamination molding, a powder layer of predetermined thickness (e.g., metal powder layer) is formed and the powder layer is irradiated with a light beam (e.g., laser beam) so as to be sintered by the heat of the light beam. In this way, a hardened layer (sintered layer) is made of sintered powder is formed. In addition, a plurality of hardened layers are sequentially laminated by repeatedly forming the powder layer and the hardened layer so that the molding member 30 is formed into a predetermined shape.

In the electroforming, an electroplating is applied to a model of the molding member 30 so that a plating layer is formed on the model. The plating layer is the molding member 30 and is separated from the model. In the plating molding, plating is applied to a model of the molding member 30 so that a plating layer is formed on the model. The model is removed from the plating layer and the plating layer is used as the molding member 30.

In this way, by various forming processes, the molding member 30 having the thin-walled part 33 is formed. At that time, the part (thin-walled part 33) of the molding member 30 in which the slit vent 34 is to be formed is made thinner than other part (thick-walled part 35) of the molding member 30. In addition, the pair of fixed parts 31 and the plurality of projections 32 are integrally formed on the molding member 30. In this state, the slit vent 34 has not been formed in the thin-walled part 33 of the molding member 30 yet. The slit vent 34 in the thin-walled part 33 is formed by subsequently applying a slit processing to the thin-walled part 33.

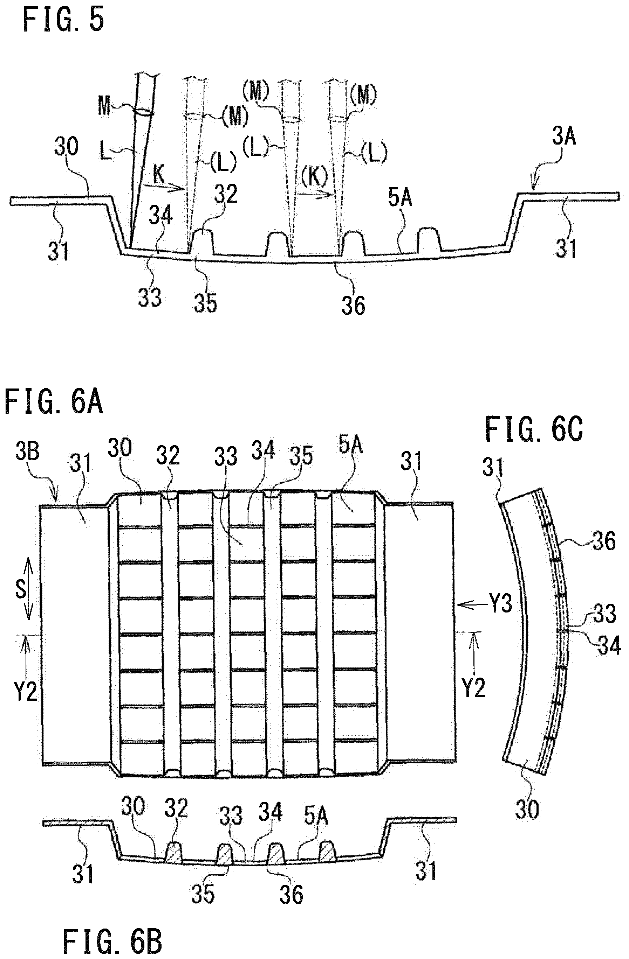

Fig. 5 is a schematic view showing a slit processing of a slit vent 34 in the first embodiment and illustrates the molding member 30 like Fig. 4B.

As illustrated, by applying the processing to the thin-walled part 33 of the molding member 30 from the molding surface 5A side, the slit vent 34 is formed in the thin-walled part 33. The slit vent 34 penetrates the thin-walled part 33 and opens to the molding surface 5A. Here, the slit vent 34 is directly processed in the thin-walled part 33 by laser processing using a laser beam L. At the time of forming the slit vent 34, the laser beam L is produced by a laser processing machine and then the laser beam L is irradiated to the molding surface 5A of the molding member 30.

The laser processing machine is, for example, a YAG laser processing machine and produces the laser beam L by a YAG laser oscillator. The laser processing machine condenses the laser beam L by a lens M and focuses the laser beam L on the thin-walled part 33 of the molding member 30. The thin-walled part 33 is partially melted and removed by using the laser beam L so that a hole is made in the thin-walled part 33. In addition, the laser beam L (focus) is moved in the thin-walled part 33 (cf. arrow K) to irradiate continuously to the thin-walled part 33. By the laser beam L, a part in the thin-walled part 33 where the slit vent 34 is to be formed is removed and the slit vent 34 is formed in the thin-walled part 33. The slit vent 34 penetrates from the molding surface 5A to the back surface 36 and opens to the back surface 36. As for the thick-walled part 35 including the projection 32, the plurality of slit vents 34 are sequentially formed without irradiating the laser beam L thereto.

When the tire 2 is molded under a general condition (vulcanizing condition, condition of rubber materials etc.), the slit vent 34 is formed in width of 0.01-0.1 mm. Thereby, air is exhausted through the slit vent 34, and rubber can be restrained from protruding into the slit vent 34. But, the thicker a formed part of the slit vent 34 is, the more difficult the correct forming of the slit vent 34 becomes, thus there is a risk that the precision of the width of the slit vent 34 would be affected. Therefore, here, the thin-walled part 33 is provided in the molding member 30 and the slit vent 34 is formed only in the thin-walled part 33. The thin-walled part 33 is formed in the thickness that is not larger than the upper limit thickness, in which the slit vent 34 is formable.

When the slit vent 34 of the width of 0.01-0.1 mm is formed by the laser processing, the thickness of the thin-walled part 33 is determined based on the characteristic of the laser beam L. The thin-walled part 33 is formed in the thickness that is not larger than the upper limit thickness, in which the slit vent 34 of the width of 0.01-0.1 mm is formable. For example, the upper limit thickness of the thin-walled part 33 is the thickness of 5-10 times of the width of the slit vent 34. Thus, the thickness of the thin-walled part 33 is limited, and the thin-walled part 33 is formed in the predetermined thickness (e.g., 0.1-0.6 mm). The molding member 30 is supported from the back surface 36 side by the support member 8 and is reinforced by the support member 8.

In the mold 3A with the above described molding member 30, the slit vent 34 can be formed in the molding member 30 with ease. In addition, the cost of the molding member 30 can be reduced and the exhausting performance of air by the slit vent 34 can be improved. An addition of the slit vent 34 or a change of shape thereof can be easily performed. Since the thin-walled part 33 is processed from the molding surface 5A side, a part of the molding surface 5A side of the slit vent 34 is cleanly processed and thus a surface condition of the slit vent 34 can be improved. As a result, the slit vent 34 is restrained from clogging up of rubber and rubber can be easily removed from the slit vent 34.

By using the molding member 30, burr is can be restrained from being produced in the tire 2 and the initial performance and the appearance of the tire 2 can be improved. Since the slit vent 34 is shallow, the slit vent 34 can be easily cleaned. When the tire 2 has been repeatedly molded, dirt in the slit vent 34 can be easily removed. At that time, the dirt in the slit vent 34 can be removed even if a nonphysical technique for cleaning (chemical cleaning, combustion removal etc.) is used. But, the slit vent 34 may be cleaned by a physical technique for cleaning (sandblast etc.).

Still more, the slit vent 34 is more preferably formed in width of 0.01-0.05 mm. In so doing, rubber is more surely restrained from protruding into the slit vent 34. In addition, the molding member 30 may be a molding member of the mold 3A to be provided on a part other than the split mold 5.

Next, a method for manufacturing mold and a mold of other embodiments will be described, but basically, the method for manufacturing mold of other embodiments is constituted like the method for manufacturing the mold 3A of the first embodiment and exhibits a similar effect. Therefore, in the following, a matter differed from the matter which is already described is described and the description of the same matter as the matter which is already described is omitted. In addition, with respect to the mold of other embodiments, the same names and reference signs given to the component of the mold 3A are used for components corresponding to the components that the mold 3A includes.

### (Second embodiment)

Figs. 6A to 6C are views illustrating a molding member 30 of a mold 3B of a second embodiment and illustrate the molding member 30 like Figs. 4A to 4C.

As illustrated, in the mold 3B of the second embodiment, a thick-walled part 35 is a part of projection 32 of the molding member 30, and a thin-walled part 33 is a part other than the projection 32 of the molding member 30. The thin-walled part 33 is thinner than other part (part of the projection 32) of the molding member 30 and the projection 32 projects with respect to the thin-walled part 33 in the molding surface 5A. On a back surface 36 of the molding member 30, the thin-walled part 33 and the thick-walled part 35 are formed smoothly as a continuous plain surface.

Like the mold 3A of the first embodiment, after forming the molding member 30 having the thin-walled part 33, the slit vent 34 is formed in the thin-walled part 33 of molding member 30. At that time, by the laser processing (cf. Fig. 5), the thin-walled part 33 is processed from the molding surface 5A side and the plurality of slit vents 34 are sequentially formed. Since the thin-walledpart 33 is the part other than the projection 32 of the molding member 30, the slit vents 34 can be formed in any position other than the projection 32. Therefore, the addition of the slit vent 34 or the change of the shape thereof can be more easily performed.

### (Third embodiment)

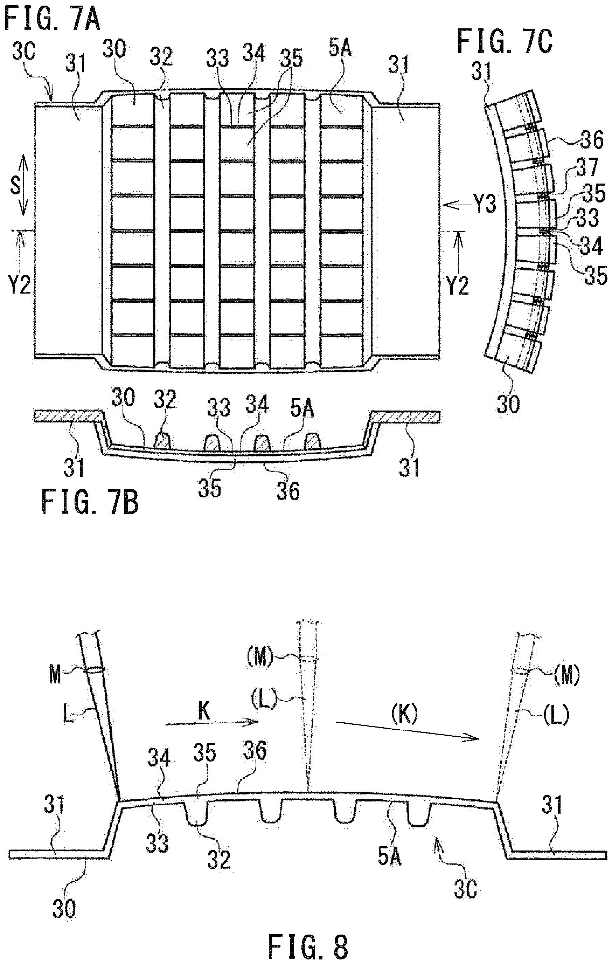

Figs. 7A to 7C are views illustrating a molding member 30 of a mold 3C of a third embodiment and illustrate the molding member 30 like Figs. 4A to 4C. Fig. 8 is a schematic view showing a slit processing of a slit vents 34 in the third embodiment and illustrates the molding member 30 like Fig. 5.

As illustrated, the mold 3C of the third embodiment comprises the molding member 30 being the same as the molding member 30 (cf. Figs. 4) of the mold 3A of the first embodiment. A part (thin-walled part 33) of the molding member 30 in which a slit vent 34 is to be formed is made thinner than other part (thick-walled part 35) of the molding member 30 so as to form the molding member 30 having the thin-walled part 33. Successively, the thin-walled part 33 of the molding member 30 is processed from an opposite surface (back surface 36) side of the molding surface 5A so that the slit vents 34 are formed.

At the time of forming the slit vent 34 (cf. Fig.8), a laser beam L is irradiated to the back surface 36 of the molding member 30. In addition, the laser beam L is moved on the back surface 36 (cf. arrow K) and thus the slit vent 34 is formed in the thin-walled part 33 by the laser processing using the laser beam L. The slit vent 34 penetrates from the back surface 36 to the molding surface 5A and opens to the molding surface 5A.

In the laser processing, the thickness in which the slit vent 34 is formable is limited. Here, the thick-walled part 35 (part of the projection 32 etc.) is formed in the thickness that is larger than the upper limit thickness, in which the slit vent 34 is formable. Therefore, no slit penetrating the thick-walled part 35 can be formed even if the laser beam L is irradiated to the thick-walled part 35. On the back surface 36 of the thick-walled part 35, a groove continued to the slit vent 34 of the thin-walled part 33 is formed. Therefore, the slit vent 34 is formed only in the thin-walled part 33 even if the laser beam L is continuously irradiated over the thin-walled part 33 and the thick-walled part 35.

In the mold 3C of the third embodiment, the molding member 30 is processed from the back surface 36 side and the slit vent 34 is formed in the thin-walled part 33 of the molding member 30. At that time, the thin-walled part 33 and the thick-walled part 35 can be continuously processed so that the slit vent 34 can be more easily formed in the thin-walled part 33. In addition, the slit vent 34 can be easily formed to the border between the thick-walled part 35 and thin-walled part 33.

### (Fourth embodiment)

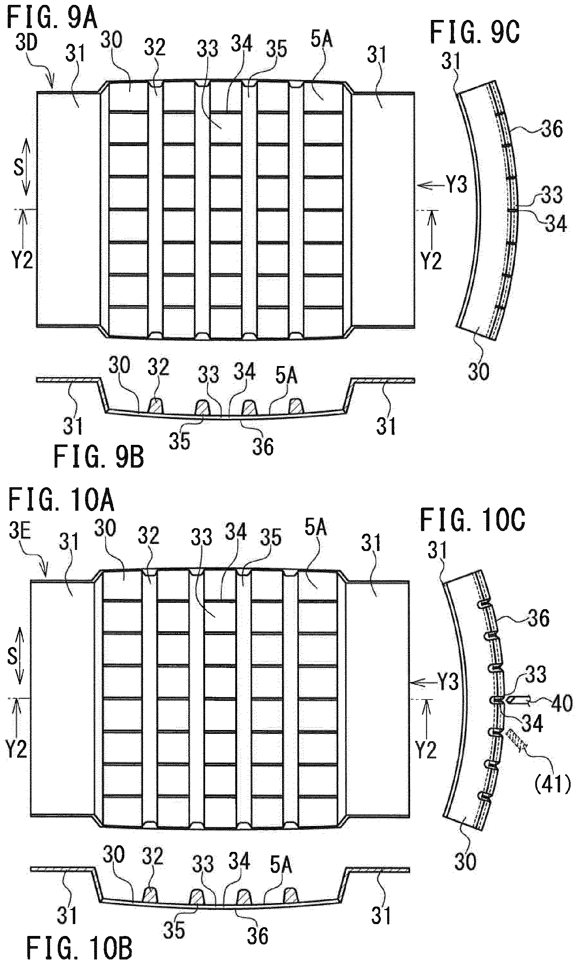

Figs. 9A to 9C are views illustrating a molding member 30 of a mold 3D of a fourth embodiment and illustrate the molding member 30 like Figs. 4A to 4C.

As illustrated, the mold 3D of the fourth embodiment comprises the molding member 30 being the same as the molding member 30 (cf. Figs. 6) of the mold 3B of the second embodiment. After forming the molding member 30 having a thin-walled part 33, like the mold 3C (cf. Fig. 8) of the third embodiment, the molding member 30 is processed from a back surface 36 side by the laser processing and a slit vent 34 is formed in the thin-walled part 33 of the molding member 30. In the mold 3D of the fourth embodiment, an effect like that of the mold 3B of the second embodiment and the mold 3C of the third embodiment is provided.

### (Fifth embodiment)

Figs. 10A to 10C are views illustrating a molding member 30 of a mold 3E of a fifth embodiment and illustrate the molding member 30 like Figs. 4A to 4C.

As illustrated, the mold 3E of the fifth embodiment comprises the molding member 30 being the same as the molding member 30 (cf. Figs. 6) of the mold 3B of the second embodiment. After forming the molding member 30 having a thin-walled part 33, by cutting work (e.g., end milling), the molding member 30 is processed from a back surface 36 side and a slit vent 34 is formed in the thin-walled part 33 of the molding member 30.

Specifically, while cutting the back surface 36 by a rotary cutting tool 40 (or cutting tool 41), the cutting tool 40 (or cutting tool 41) is moved on the back surface 36. In this way, the thin-walled part 33 and a thick-walled part 35 are continuously processed so that the slit vent 34 penetrating the thin-walled part 33 is formed. In the thick-walled part 35, only the part of the back surface 36 side is cut into a groove, and the part of the molding side 5A side is not cut. In the mold 5E of the fifth embodiment, an effect like that of the mold 3B of the second embodiment and the mold 3C of the third embodiment is provided.

As described above, the mold has been described taking the case that the rubber article is a tire as an example, but the rubber article may be other rubber article without limited to a tire. The rubber article is an article made of rubber molded by a mold, for example, an article made of only rubber or an article made of rubber and other materials.

### (Manufacturing test of the mold)

For confirming the effect of the present invention, the molds were manufactured by the manufacturing methods that have been described above and the tires 2 were molded by the molds. In the test, the molding members 30 were manufactured by the method for manufacturing the mold 3A of the first embodiment, which is not in accordance with the invention, and the method for manufacturing the mold 3C of the third embodiment, which is in accordance with the invention, respectively.

The molding member 30 is made in a shape formed by dividing a ring (inside diameter: ϕ 600 mm, height: 300 mm, basic thickness : 0.8 mm) into plural parts in the mold circumferential direction S. The molding member 30 having the thin-walled part 33 was formed by the powder lamination molding in which the metal powder (material: 18% Ni-based maraging steel) was sintered by the laser beam. The thickness of the thin-walled part 33 is 0.2 mm, and the width of the thin-walled part 33 was 1 mm. By the laser processing using the YAG laser processing machine, the slit vent 34 (width: 0.04 mm) was formed in the thin-walled part 33.

At the time of molding the tire 2, seven kinds of the molding members 30 were used in response to a tread pattern of the tire 2 and sixty molding members 30 were put together into a ring shape. At that time, the fixed parts 31 of the molding member 30 were fixed to the support member 8 (thickness: 60 mm) and supported by the support member 8. The support member 8 was a casting made of aluminum alloy (Japanese Industrial Standards: AC7A) and produced by cutting work.

In the method for manufacturing the mold 3A (cf. Figs. 4, Fig. 5) of the first embodiment, the laser beam L was irradiated only to the thin-walled part 33 of the molding member 30. By the laser beam L, the thin-walled part 33 was processed from the molding surface 5A side so that the slit vent 34 was formed in the thin-walled part 33. Thereafter, the slit vent 34 was made smooth by a wet blast (the particle size of the abrasive grains: # 1000-1200) . In the tire 2 which was molded by the molding member 30, the height of the burr was reduced smaller than 1 mm. It was understood that the accurate slit vent 34 could be formed in the molding member 30 with ease in this way.

In the method for manufacturing the mold 3C (cf. Figs. 7, Fig. 8) of the third embodiment, the laser beam L was continuously irradiated to the back surface 36 of the molding member 30. By the laser beam L, the molding member 30 was processed from the back surface 36 side so that the slit vent 34 was formed in the thin-walled part 33. Thereafter, the slit vent 34 was made smooth by a wet blast (the particle size of the abrasive grains: # 1000-1200). In the tire 2 which was molded by the molding member 30, the height of the burr was reduced smaller than 1 mm. It was understood that the accurate slit vent 34 could be formed in the molding member 30 with ease in this way. In addition, by this method, the slit vent 34 could be more easily formed than the method for manufacturing the mold 3A of the first embodiment.

### Reference Signs List

1...tire molding device
2...tire
3A∼3E...mold
4...bladder
5...split mold
5A...molding surface
6...holding ring
7...internal space
8...support member
9...exhaust passage
10...opening/closing mechanism
11...upper plate
12...lower plate
13...outer ring
14...movable member
20...upper side mold
21...lower side mold
30...molding member
31...fixed part
32...projection
33...thin-walled part
34...slit vent
35...thick-walled part
36...back surface
37...step
40...cutting tool
41...cutting tool
H...radial direction of the mold
L...laser beam
S...mold circumferential direction
P...dividing position
W...tire width direction

## Claims

1. A method for manufacturing a mold (3A) for rubber article comprising a molding member (30) with a molding surface (5A) for being brought into contact with a rubber article to mold the rubber article and a back surface (36) opposite to the molding surface (5A), comprising steps of:
forming the molding member (30) having a thin-walled part (33) by making a part in which a slit vent (34) of the molding member (30) is to be formed, thinner than a thick walled part (35) of the molding member (30), and
forming, in the thin-walled part (33) of the molding member (30), the slit vent (34) penetrating the thin-walled part (33) and opening to the molding surface (5A) by irradiating a laser beam (L) to the back surface (36) of the molding member (30) and moving the laser beam (L) on the back surface (36).

2. The method for manufacturing mold (3A) for rubber article according to claim 1, wherein the thick-walled part (35) is formed in a thickness that is larger than the upper limit thickness, in which the slit vent (34) is formable by the laser beam (L).

## Patentansprüche

1. Verfahren zum Herstellen einer Form (3A) für einen Kautschukartikel, die ein Formungselement (30) mit einer Formungsfläche (5A), die in Berührung mit einem Kautschukartikel zu bringen ist, um den Kautschukartikel zu formen, und eine hintere Fläche (36), entgegengesetzt zu der Formungsfläche (5A), umfasst, wobei das Verfahren die folgenden Schritte umfasst:
Formen des Formungselements (30), das einen dünnwandigen Teil (33) aufweist, durch Herstellen eines Teils, in dem ein Entlüftungsschlitz (34) des Formungselements (30) geformt werden soll, dünner als ein dickwandiger Teil (35) des Formungselements (30), und
Formen, in dem dünnwandigen Teil (33) des Formungselements (30), des Entlüftungsschlitzes (34), der den dünnwandigen Teil (33) durchdringt und sich zu der Formungsfläche (5A) öffnet, durch Ausstrahlen eines Laserstrahls (L) auf die hintere Fläche (36) des Formungselements (30) und Bewegen des Laserstrahls (L) auf der hinteren Fläche (36).

2. Verfahren zum Herstellen einer Form (3A) für einen Kautschukartikel nach Anspruch 1, wobei der dickwandige Teil (35) in einer Dicke geformt wird, die größer ist als eine Dickenobergrenze, in welcher der Entlüftungsschlitz (34) durch den Laserstrahl (L) formbar ist.

## Revendications

1. Procédé de fabrication d'un moule (3A) pour un article en caoutchouc, comprenant un élément de moulage (30) avec une surface de moulage (5A) destinée à être mise en contact avec un article en caoutchouc pour mouler l'article en caoutchouc, et une surface arrière (36) opposée à la surface de moulage (5A), comprenant les étapes ci-dessous :
formation de l'élément de moulage (30) comportant une partie à parois fines (33) en formant une partie dans laquelle un évent fendu (34) de l'élément de moulage (30) doit être formé, plus fine qu'une partie à parois épaisses (35) de l'élément de moulage (30) ; et
formation, dans la partie à parois fines (33) de l'élément de moulage (30) de l'évent fendu (34) pénétrant dans la partie à parois fines (33) et ouvert vers la surface de moulage (5A) par irradiation d'un faisceau laser (L) sur la surface arrière (36) de l'élément de moulage (30) et par déplacement du faisceau laser (L) sur la surface arrière (36).

2. Procédé de fabrication d'un moule (3A) pour un article en caoutchouc selon la revendication 1, dans lequel la partie à parois épaisses (35) est formée avec une épaisseur supérieure à l'épaisseur limite supérieure, dans lequel l'évent fendu (34) peut être formé par le faisceau laser (L).
